# FASCICULE DE BREVET EUROPEEN

(11) **EP 3 322 289 B1**
(45) Date de publication et mention de la délivrance du brevet: **05.02.2020**
(21) Numéro de dépôt: 16741583.5
(22) Date de dépôt: 12.07.2016
(51) Int. Cl.: A01N 25/00

(54) **UTILISATION DE POLYMERES SUPERABSOBANTS EN TANT QUE RODONTICIDE**
VERWENDUNG VON SUPERABSORBIERENDE POLYMEREN ALS RODENTIZID
USE OF SUPERABSORBENT POLYMERS AS A RODENTICIDE

(30) Priorité: 15.07.2015 FR 1556668
(43) Date de publication de la demande: 23.05.2018
(73) Titulaire: Izinovation, 69006 Lyon (FR); Sillion, Bernard, 69005 Lyon (FR); Verd, Jean Michel, 42400 Saint Chamond (FR); Bergue, Bertrand, 69300 Caluire et Cuire (FR)
(72) Inventeur: SILLION, Bernard, 69005 Lyon (FR); LASSEUR, Romain, 69210 Bully (FR); BERGUE, Bertrand, 69300 Caluire et Curie (FR); VERD, Jean-Michel, 42400 Saint Chamond (FR)
(74) Mandataire: Nony
(86) Numéro de dépôt international: PCT/EP2016/066545
(87) Numéro de publication internationale: WO 2017/009342

(56) Documents cités:
- BE-A5- 1 000 534
- FR-A1- 2 559 158
- JP-A- H02 304 007

## Description

La présente invention concerne une utilisation de polymères pour la fabrication d'un produit rodenticide.

Les rongeurs peuvent représenter un danger sanitaire, du fait des différentes maladies dont ils peuvent être le vecteur, mais également un danger économique, puisqu'ils sont responsables d'une importante destruction de denrées alimentaires ou de dégradation de matériel, par exemple en rongeant des câbles.

La surpopulation de ces rongeurs est un tel problème, que l'industrie mondiale des rodenticides représente 400 à 600 millions d'euros (valeur fabricant) en 2014 avec une répartition de 34 % pour l'Amérique du nord, 20 % pour l'Asie, 11 % pour l'Amérique latine et 35 % pour l'Europe dont environ 11 % pour la France.

Les rodenticides actuellement sur le marché utilisent tous une substance active dont l'effet létal est dû à une molécule chimique conduisant à diverses perturbations biologiques: soit avec action anti-vitamine K pour les hydroxy coumarines de première génération (coumafène, coumachlor, coumatetralyl) ou de deuxième génération, plus toxiques, (bromadiolone, difénacoum, diféthialone, brodifacoum, flocoumafène...) ou encore dérivés des indanediones (chlorophacinone, difacinone...) soit avec action sur le système nerveux central pour les chloraloses ou la crimidine soit avec action cardiotoxique et convulsifiante tel que le scilliroside. On a aussi recherché une hypercalcemie avec le calciférol ou des convulsions avant arrêt respiratoire avec la strychnine.

De manière connue, le rodenticide se compose d'un produit appétant comestible mélangé à des produits actifs tels que ceux cités ci-dessus.

Ces produits sont cependant tous dangereux pour l'ensemble des animaux, mais également pour l'homme, et polluent l'environnement. La Commission européenne ne cesse de renforcer les exigences pour la mise sur le marché des substances biocides : la directive 98/8/CE a été remplacée par le règlement 528/2012 ; la décision exécutoire de la commission du 17 décembre 2013 limite aux professionnels l'usage des dérivés de la bromadiolone et un nouveau classement des anti-vitamines K par l'ECHA a été effectué.

Le fait de disposer de rodenticides plus écologiques est donc devenu une demande sociétale.

Un produit rodenticide est une substance active ou une préparation ayant la propriété de tuer des rongeurs. Parmi les rongeurs, en particulier les rongeurs nuisibles, on peut citer les rats (rats noirs, rats gris par exemple), les souris ainsi que les campagnols.

Plusieurs demandes de brevet concernant des rodenticides sans agents chimiques inscrits à l'annexe 1 du règlement biocide 528/2012 ont été déposées.

La demande de brevet européen N° EP 0 248 929 revendique par exemple un produit rodenticide dont le principe actif est un produit végétal (légume ou fruit) déshydraté à froid et présenté sous forme de granulés. Ce brevet de 1986 divulgue le fait qu'un effet rodenticide peut être obtenu par un produit à caractère hydrophile mais cette matrice est combinée avec un principe chimique actif ce qui ne permet pas d'attribuer une activité rodenticide au produit végétal hydrophile.

Sur la base de ce même concept, la demande de brevet japonais N° JPH 02304007 décrit des polymères issus de l'amidon ou de la cellulose ; ces polymères sont modifiés par greffage d'acrylonitrile suivi d'une hydrolyse. Les compositions revendiquées dans cette demande de brevet absorberaient l'eau dans l'estomac avec un gonflement pouvant atteindre 1000 à 2000 fois le volume initial, ce qui provoquerait la mort de l'animal par éclatement des viscères. Le lieu de gonflement ciblé par l'absorption de tels polymères est donc l'estomac.

La demande de brevet N° DE 10051065 divulgue une substance hydrophile minérale telle que le sulfate de calcium qui est protégée par un polymère non hydrophile afin de franchir l'estomac du rongeur car l'effet rodenticide proviendrait de l'absorption de l'eau au niveau de l'intestin de l'animal et non de l'estomac.

La demande de brevet N° EP 1 639 893 divulgue une substance qui est un alpha cellulose hydrophile encapsulée pour lui faire franchir l'estomac de l'animal. Le produit encapsulant protégeant l'alpha cellulose de l'eau est soit un polymère non hydrophile soit une amylase. Le polymère encapsulant est détruit dans l'intestin et l'alpha cellulose absorbe l'eau ce qui inhiberait les échanges ioniques au niveau de l'intestin, provoquant la mort de l'animal.

Enfin, le document BE1000534 A5 décrit une composition pour l'extermination d'animaux rongeurs contenant un produit toxique inscrite à l'annexe 1 du règlement biocide pour ces animaux et un appât, ainsi que des particules d'un polymère synthétique gonflable. Il est précisé que ces polymères gonflables peuvent manifester un effet d'obstruction s'ajoutant à l'effet du produit toxique lui-même, et que ces particules gonflent dans l'estomac.

Ces techniques existantes ne donnent pas parfaitement satisfaction car elles sont très peu efficaces en conditions réelles d'utilisation. En particulier, pour protéger le produit actif par encapsulation afin de lui faire traverser l'estomac et atteindre l'intestin sans être au contact du liquide stomacal, des opérations industrielles complexes et coûteuses sont nécessaires.

Il s'ensuit que parmi les documents de l'art antérieur mentionnant l'utilisation de polymères non encapsulés, seuls des phénomènes de gonflements de polymères ayant lieu dans l'estomac sont mentionnés. Il est d'ailleurs à noter que ces phénomènes ne sont parfois décrits que comme produisant des effets additionnels par rapport à l'effet d'un produit toxique rodenticide. Autrement dit, il n'a jamais été proposé jusqu'à présent de moyen d'agir plus particulièrement sur les intestins des rongeurs à exterminer par administration de polymères hydrophiles non encapsulés, et ce jusqu'à une dose létale et qui plus est, sans administration conjointe d'un produit toxique rodenticide annexe. De plus, l'art antérieur ne décrit pas ni ne suggère qu'en ajustant la capacité d'absorption aqueuse de polymères hydrophiles, en particulier une capacité d'absorption aqueuse maximale, une activité létale peut être conférée à des polymères hydrophiles, par action sur les intestins des rongeurs à exterminer.

La présente invention a pour objectif de remédier aux inconvénients précités en proposant un rodenticide écologique et économique, agissant sur les espèces ciblées, et non dangereux pour l'homme, les autres animaux et l'environnement.

Plus précisément, il existe un besoin de fournir des polymères hydrophiles, en particulier ne nécessitant pas de formulation par encapsulation, respectueux de l'environnement et présentant une capacité d'absorption ajustée à une activité létale sur des animaux rongeurs à exterminer, et ce plus particulièrement par action au niveau de leurs intestins.

L'invention consiste en l'utilisation de polymères hydrophiles l'acide polyacrylique ou polyacrylate d'un cation monovalent, en particulier de sodium, réticulés dans des proportions comprises entre 50 et 10000 parties par million, pour la fabrication d'un produit rodenticide.

De plus, l'invention a pour objet l'utilisation de polymères hydrophiles de l'acide polyacrylique ou polyacrylate d'un cation monovalent, en particulier de sodium, réticulés dans des proportions comprises entre 50 et 10000 parties par million, à titre de substance active rodenticide.

Le document décrit également l'utilisation de polymères hydrophiles de l'acide polyacrylique ou polyacrylate d'un cation monovalent, en particulier de sodium, réticulés dans des proportions comprises entre 50 et 10000 parties par million, à titre de substance active rodenticide destinée à provoquer une activité létale au niveau des intestins de l'animal rongeur, en particulier dénuée de formulation par encapsulation.

Selon un mode de réalisation particulier de l'invention, l'utilisation est dénuée d'une utilisation concomitante d'une substance rodenticide additionnelle. Autrement dit, selon ce mode de réalisation, le polymère hydrophile conforme à l'invention est administré comme seule substance active rodenticide, en particulier sans formulation par encapsulation.

Ainsi, la présente invention concerne en particulier l'utilisation précitée, dans laquelle les polymères hydrophiles sont des polyacrylates de sodium réticulés, en particulier utilisés à titre d'unique substance active rodenticide, lesdits polymères étant encore plus particulièrement non encapsulés.

Dans le cadre de la présente invention, le terme «polymère réticulé dans des proportions comprises entre x et y ppm » signifie qu'un polymère est réticulé par polymérisation en présence d'une quantité d'agent de réticulation dans des proportions comprises entre x et y ppm par rapport à la quantité de monomères monofonctionnels. L'agent de réticulation peut aussi être utilisé dans les mêmes proportions par post traitement ; cet agent est classiquement un monomère bi-fonctionnel, qui précisément permet le phénomène de réticulation.

Les polymères synthétiques super absorbants (ou SAP, de l'anglais *super absorbent polymers*) utilisables dans le cadre de l'invention sont d'une manière générale des polymères réticulés ou pouvant être post-réticulés, tels que ceux décrits par exemple dans la publication de demande de brevet N° FR 2 559 158.

D'une manière générale, les polymères hydrophiles d'origine synthétique super absorbants commercialisés dans le monde appartiennent aux familles des polyacrylamides, polyacrylates et copolymères acrylates-acrylamides. Ils sont usuellement utilisés comme produits d'hygiène ou pour le traitement des eaux et des sols.

Ces polymères et copolymères peuvent être obtenus par toutes les techniques de polymérisation connues de l'homme de métier : polymérisation en solution, en émulsion, en suspension, en utilisant un monomère bi-fonctionnel réticulant dans des proportions comprises entre 50 et 10000 ppm, ces polymérisations étant suivies d'une étape permettant d'isoler une forme sèche.

Les inventeurs ont démontré que parmi les trois familles précitées des polymères hydrophiles d'origine synthétique super absorbants, les polymères hydrophiles de l'acide polyacrylique ou polyacrylate de cations monovalents, en particulier de sodium, réticulés, sont particulièrement adaptés pour provoquer une activité létale lorsqu'ils sont administrés à des animaux rongeurs, ces derniers agissant en particulier au niveau de leurs intestins, comme cela est illustré dans les exemples ci-après.

Ainsi, les inventeurs ont constaté, à contre-courant de l'enseignement de l'art antérieur, que les polyacrylates de cations monovalents, en particulier de sodium, réticulés dans les proportions précitées, ont la capacité d'être létaux par administration orale à des rongeurs et peuvent donc être utilisés comme rodenticides.

Pour comparaison et illustration de la nécessité de la réticulation, des polyacrylates de sodium non réticulés ont été testés sur des rats mâles et femelles avec des doses orales de 0,005, 0,01, 0,025, 0,050 ou 0,1 g/kg avec un polyacrylate de masse molaire de 13.10⁶ Da ; sur un groupe de quatre mâles et de quatre femelles traités avec des doses de 0,15 à 1 g/kg, aucun effet significatif n'a été observé après avoir sacrifié les animaux 10h après traitement ; la dose létale d'une solution de polyacrylate de sodium à 15 % déterminée sur un groupe de dix rats a été trouvée supérieure à 40 g/kg. La simple propriété hydrophile d'un polymère n'est pas suffisante pour lui conférer des propriétés rodenticide, et c'est à l'issue de ses recherches sur la question que l'inventeur a pu déterminer que l'utilisation de polymères hydrophiles de l'acide polyacrylique ou polyacrylate de sodium, réticulés dans des proportions comprises entre 50 et 10000 parties par million, permettait la fabrication d'un produit rodenticide.

Ainsi, la réticulation, qui correspond à la formation d'un ou de plusieurs réseaux tridimensionnels par la présence de liaisons entre les chaînes polymériques, contribue pleinement à conférer un caractère létal à la famille de polymères utilisés dans le cadre de la présente invention. On précise que tout type de réticulation convient dans le cadre de la présente invention, à savoir, une réticulation en surface ou à cœur.

Comme illustré dans les exemples 3 et 6 ci-après, les inventeurs ont démontré que la nature du polymère superabsorbant est également déterminante quant à l'activité létale recherchée. Ainsi, il a pu être mis en évidence que bien que la capacité d'absorption de l'eau d'un copolymère acrylate de sodium 30 % et acrylamide 70 % semble conforme aux exigences selon la présente invention, la présence de monomères acrylamides dans le polymère administré à l'animal rongeur, empêche d'atteindre l'objectif visé, à savoir la mort de l'animal.

L'activité rodenticide des polymères hydrophiles de l'acide polyacrylique ou polyacrylate de cations monovalents, en particulier de sodium, est par ailleurs liée à la quantité d'eau absorbée dans le système digestif.

Sans que les inventeurs ne soient liés par aucune théorie, ils supposent qu'un choc hydrique a lieu au bout de quelques jours dans les intestins des animaux à qui les polymères conforme à l'invention ont été administrés, et que leur mort est ainsi provoquée. Autrement dit, le mécanisme d'action dont les inventeurs tirent profit dans le cadre de la présente invention n'est pas l'obstruction par un gonflement massif provoquant une obstruction ou un éclatement des viscères, ni une action par toxicité chimique mais une accumulation suffisamment durable d'une quantité d'eau adaptée dans les intestins de l'animal rongeur. Ce type d'approche n'avait jamais été envisagé auparavant, impliquant une sélection de la nature chimique d'un polymère hydrophile ainsi que de sa proportion en réticulation, influençant la capacité d'absorption aqueuse.

Ainsi, selon un mode de réalisation particulier de l'invention, la quantité d'eau absorbée par un polymère hydrophile conforme à l'invention, avant formulation, est inférieure à 600 % et de préférence comprise entre 100 et 500 % en poids par rapport au poids total en polymères.

Selon un mode de réalisation encore plus particulier de l'invention, la quantité d'eau absorbée avant formulation est comprise entre 120 et 450 % en poids par rapport au poids total en polymères ce qui correspond à des degrés de réticulation compris entre 100 et 6000 ppm.

Il est entendu que le terme « avant formulation » signifie que la mesure d'absorption de l'eau, en particulier de l'eau non distillée neutre, est effectuée sans que le polymère conforme à l'invention ne soit mis en œuvre dans une formulation galénique propice à l'utilisation visée selon la présente invention.

Un autre avantage de ces polymères réticulés est qu'en raison de leurs propriétés et des spécificités anatomiques des rongeurs ciblés, ils n'ont pas besoin d'un enrobage pour passer l'estomac de l'animal car leur comportement vis-à-vis de l'eau représente un rôle important : en effet dans le milieu stomacal très acide, le polymère absorbe peu d'eau, gonfle faiblement et peut donc atteindre l'intestin dans lequel le changement de pH permet une plus grande affinité avec l'eau.

Il a ainsi pu être constaté qu'en présence du pH moyen du milieu stomacal d'un rongeur, l'absorption d'eau par le produit rodenticide obtenu était comprise entre 10 % et 30 %, et qu'en présence du pH moyen du milieu intestinal d'un rongeur, l'absorption d'eau par la substance active rodenticide obtenue était comprise entre 50 % et 100 %.

Il a aussi pu être constaté, comme cela est illustré en particulier aux exemples 1 et 2, qu'en présence du pH moyen du milieu stomacal d'un rongeur, l'absorption d'eau par le polymère hydrophile conforme à l'invention était comprise entre 10 % et 30 %, et qu'en présence du pH moyen du milieu intestinal d'un rongeur, l'absorption d'eau par le polymère hydrophile conforme à l'invention était comprise entre 50 % et 100 %.

Le pH moyen, stomacal ou de l'instestin, est compris comme étant un pH moyen, stomacal ou de l'intestin, entre les espèces de rongeurs nuisibles que la présente invention vise à exterminer.

Il apparaît ainsi qu'une capacité d'absorption des polymères conformes à l'invention, bien moindre que celle qui semble visée par exemple pour des polymères d'une autre nature dans le document de l'art antérieur JPH 02304007 mentionné dans le préambule, est utile pour atteindre l'activité létale recherchée.

Selon un mode de réalisation particulier, on utilise des polyacrylates de sodium réticulés. Parmi les polymères hydrophiles de l'acide polyacrylique ou polyacrylate de cations monovalents, en particulier de sodium convenant à la mise en œuvre de l'invention, on peut en particulier citer les polyacrylates de sodium réticulés vendus pas la société Aprotek, en particulier vendus sous les dénominations PXL 150 ou G300.

A titre de cation monovalent, on peut citer tout cation monovalent métallique, en particulier, les métaux alcalins tels que le sodium ou le potassium.

Selon un mode de réalisation particulier, les degrés de réticulation des polymères conformes à l'invention sont compris entre 100 ppm et 6000 ppm. Ces degrés de réticulation sont atteints par utilisation d'un monomère bi-fonctionnel dans des proportions comprises entre 100 et 6000 ppm.

Selon encore un autre mode de réalisation particulier, les polymères hydrophiles de l'acide polyacrylique ou polyacrylate de cation monovalent, en particulier de sodium, sont réticulés dans des proportions inférieures à 1500 ppm, en particulier dans des proportions comprises entre 200 et 1500 ppm.

A titre d'exemple, les polymères vendus pas la société Aprotek, en particulier vendus sous les dénominations PXL 150 ou G300 sont tous deux réticulés dans des proportions de 600 ppm. Le 150XL est réticulé en surface et le G300 est réticulé durant la polymérisation ce qui explique les différences de capacité d'absorption d'eau malgré un même degré de réticulation.

Selon un mode de réalisation particulier de l'invention, les polymères conformes à l'invention peuvent se présenter sous forme de poudres ou granulés. La dimension moyenne de cette poudre ou de ces grains peut avantageusement être inférieure à 1 mm. Ainsi, selon un mode de réalisation particulier de l'invention, les poudres ou granulés de polymères conformes à l'invention peuvent présenter une dimension moyenne comprise entre 0,2 et 1 mm, en particulier entre 0,3 et 0,8 mm.

Dans le cas du produit vendu par la société Aprotex sous la dénomination 150XL la taille des grains est inférieure à 350 micromètres et dans le cas du produit vendu par la société Aprotex sous la dénomination G300, la taille des grains est inférieure à 750 micromètres.

La présente invention a également pour objet une utilisation conforme à l'invention dans laquelle les polymères hydrophiles sont formulés dans des produits rondenticides, de préférence dénués de substance rodenticide additionnelle, et également en particulier dénués d'une formulation par encapsulation, présentant un enrobage appétant selon des proportions respectives de 1 à 50 % en masse de polymère et de 99 à 50 % en masse d'enrobage appétent, par rapport à la masse totale des produits rodenticides.

Le document décrit aussi un produit rodenticide, caractérisé en ce qu'il comprend au moins un polymère conforme à l'invention ainsi qu'au moins un produit appétant pouvant être choisi parmi les céréales, les huiles végétales, la paraffine et leurs mélanges.

Est également décrit un produit rodenticide composé de polymères tels que précités et d'un enrobage appétant selon des proportions respectives de 1 à 50 % en masse de polymère et de 99 à 50 % en masse d'enrobage appétent, et de préférence entre 5 et 40 % en masse de polymères et entre 95 à 60 % en masse d'enrobage appétant, par rapport à la masse totale de produit rodenticide.

Grâce à cet enrobage appétant, l'animal ciblé est attiré et ingère le rodenticide. Ce dernier traverse l'estomac en absorbant peu d'eau et se retrouve dans l'intestin, provoquant la mort de l'animal en quelques jours.

L'enrobage appétant peut notamment être constitué à base de céréales et d'huile végétale ou de paraffine, et peut comprendre tout produit entrant dans la composition d'un rodenticide.

Le produit rodenticide peut se présenter sous forme de granulés, de pâtes, de bloc, ou être en mélange avec des céréales.

Le produit rodenticide peut être obtenu par un procédé qui comprend les étapes consistant à mélanger les polymères précités avec un produit appétant pour former une pâte, puis à utiliser une extrudeuse pour mettre le produit en forme.

Le document décrit aussi un procédé de fabrication d'un produit rodenticide, caractérisé en ce qu'il comprend les étapes consistant à mélanger les polymères conformes à l'invention avec un produit appétant pour former une pâte, puis à mettre la pâte ainsi obtenue en forme, éventuellement à l'aide d'une extrudeuse.

Est également décrit un produit rodenticide obtenu par le procédé de fabrication selon la présente invention.

Les exemples et tableaux ci-après illustrent l'invention.

### Exemple n° 1 : Le comportement d'un polymère A (référence : PXL 150 de la société Aprotek) dans l'eau, le milieu stomacal, le milieu intestinal

Dans un bécher on introduit 1g de polymère et 1000g de liquide eau (composition correspondant au liquide stomacal, composition correspondant au liquide intestinal). A l'équilibre on filtre puis on pèse le filtrat et on en déduit la quantité de liquide absorbé par le polymère. L'opération est répétée trois fois à 25 et 40 °C :

| P150 XL | Eau | Milieu gastrique | Milieu intestinal |
|---|---|---|---|
| Poids absorbé % | 145-148 | 20 | 60 |

### Exemple n° 2 : Le comportement du polymère B (référence G300 de la société Aprotek) dans l'eau, le milieu stomacal, le milieu intestinal.

Dans les mêmes conditions que celles décrites dans l'exemple 1 on détermine l'absorption du polymère B :

| G300 | Eau | Milieu gastrique | Milieu intestinal |
|---|---|---|---|
| Poids absorbé % | 400 | 20 | 93 |

### Exemple n°3 (comparatif) : le comportement d'un polymère C (référence :

Aprodev moyenne des grains inférieure à 3000µm)

| Aprodev06 | Eau | Milieu gastrique | Milieu intestinal |
|---|---|---|---|
| Poids absorbé % | 300 | 30 | 50 |

### Exemple n°4 : Préparation d'une formule appétente avec le polymère A

12g de sucre (marque Daddy®), 0,24g de sel de cuisine (sel fin, marque Cérébos®), 145g de farine de blé (fluide T45, marque Sonnen Gold®), et 22,8g de poudre d'amande (amande en poudre, marque Vahiné®) sont ajoutés et mélangés à 450g de polymère super-absorbant (référence P150XL de chez Aprotek) afin d'obtenir un mélange de poudres homogène. Ensuite, 270g d'huile de colza (marque Aurea) sont ajoutés sous agitation à ce mélange. Enfin, ce mélange est malaxé jusqu'à obtention d'un produit homogène.

### Exemple n°5 : Préparation de formule appétente avec le polymère B

8g de sucre (marque Daddy®), 0,16g de sel de cuisine (sel fin marque Cérébos®), 97g de farine de blé (fluide T45, marque Sonnen Gold®), et 15,2g de poudre d'amande (amande en poudre, marque Vahiné®) sont ajoutés et mélangés à 300g de polymère super-absorbant (référence G300 de chez Aprotek) afin d'obtenir une poudre homogène. Ensuite, 180g d'huile de colza (marque Aurea) sont ajoutés et ce mélange est malaxé jusqu'à obtention d'un produit homogène.

Le tableau 1 ci-après présente les résultats de la consommation d'un produit rodenticide conforme à l'invention par des rats bruns ; et

Le tableau 2 ci-après présente les résultats de la consommation d'un produit rodenticide conforme à l'invention par des souris.

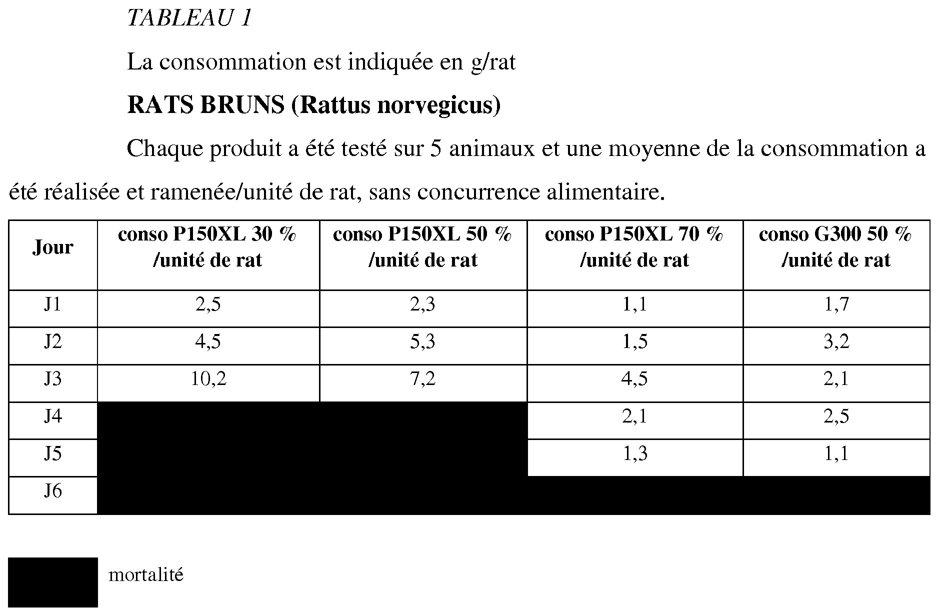

La consommation du polymère A est létale dès le quatrième jour. La consommation du polymère B est également létale mais avec un effet dès le sixième jour.

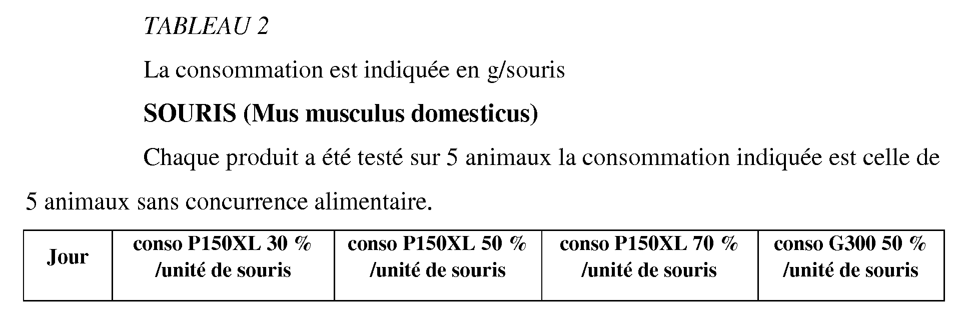

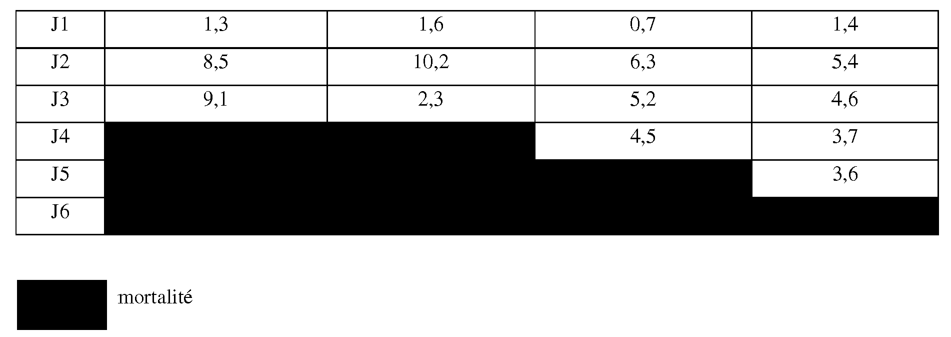

### Exemple n° 6 (comparatif) : Préparation de formule appétente avec le polymère C de l'exemple comparatif 3

8g de sucre (marque Daddy®), 0,16g de sel de cuisine (sel fin marque Cérébos®), 97g de farine de blé (fluide T45, marque Sonnen Gold®), et 15,2g de poudre d'amande (amande en poudre, marque Vahiné®) sont ajoutés et mélangés à 350g de polymère super-absorbant (référence Aprodev 06 de chez Aprotek) afin d'obtenir une poudre homogène. Ensuite, 180g d'huile de colza (marque Aurea) sont ajoutés et ce mélange est malaxé jusqu'à obtention d'un produit homogène.

Le tableau 3 ci après présente les résultats de la consommation d'un produit rodenticide comparatif, par des souris.

**TABLEAU 3**

| **RATS BRUNS (Rattus norvegicus)** | | **SOURIS (Mus musculus domesticus)** | |
|---|---|---|---|
| Le produit a été testé sur 5 animaux et une moyenne de la consommation a été réalisée et ramenée/unité de rat. | | Chaque produit a été testé sur 5 animaux. La consommation indiquée est celle de 5 animaux sans concurrence alimentaire | |
| Jour | Conso Aprodev06 50 %/ unité de rat | Jour | Conso Aprodev06 50 %/ unité de 5 souris |
| J1 | 1,3 | J1 | 2,4 |
| J2 | 2,6 | J2 | 4,8 |
| J3 | 3,2 | J3 | 5,6 |
| J4 | 3,4 | J4 | 6,1 |
| J5 | 1,2 | J5 | 4,3 |
| J6 | 1,1 | J6 | 4,2 |

Pour les deux types d'animaux on n'observe aucune mortalité. Cet exemple a démontré l'inefficacité d'une formulation préparée avec l'Aprodev 06.

## Revendications

1. Utilisation de polymères hydrophiles de l'acide polyacrylique ou polyacrylate de cation monovalent, réticulés dans des proportions comprises entre 50 et 10000 parties par million à titre de substance active rodenticide.

2. Utilisation selon la revendication 1, dans laquelle le cation monovalent est le sodium.

3. Utilisation selon la revendication 1 ou 2, dans laquelle, en présence du pH moyen du milieu stomacal d'un rongeur, l'absorption d'eau par ladite substance active rodenticide est comprise entre 10 % et 30 %, et qu'en présence du pH moyen du milieu intestinal d'un rongeur, l'absorption d'eau par ladite substance active rodenticide est comprise entre 50 % et 100 %.

4. Utilisation selon l'une des revendications 1 à 3, dans laquelle les polymères hydrophiles sont des polyacrylates de sodium réticulés utilisés à titre d'unique substance active rodenticide, lesdits polymères étant en particulier non formulés par encapsulation.

5. Utilisation selon l'une des revendications 1 à 4, dans laquelle les degrés de réticulation des polymères sont compris entre 100 ppm et 6000 ppm, en particulier entre 200 et 1500 ppm.

6. Utilisation selon l'une quelconque des revendications 1 à 5, dans laquelle la quantité d'eau absorbée par les polymères hydrophiles, avant formulation, est inférieure à 600 %, de préférence comprise entre 100 et 500 % en poids, et de façon encore plus préférée entre 120 et 450 % en poids par rapport au poids total en polymères.

7. Utilisation selon l'une quelconque des revendications 1 à 6, dans laquelle les polymères hydrophiles sont formulés dans des produits rodenticides, de préférence dénués de substance active rodenticide additionnelle, et également en particulier dénués d'une formulation par encapsulation, présentant un enrobage appétant selon des proportions respectives de 1 à 50 % en masse de polymère et de 99 à 50 % en masse d'enrobage appétant, par rapport à la masse totale des produits rodenticides.

8. Utilisation selon la revendication 7, dans laquelle les polymères hydrophiles sont formulés dans des produits rodenticides, de préférence dénués de substance active rodenticide additionnelle, présentant un enrobage appétant selon des proportions respectives allant de 5 à 40 % en masse de polymères et allant de 95 à 60 % en masse, par rapport à la masse totale des produits rodenticides.

9. Utilisation selon l'une des revendications 7 ou 8, dans laquelle l'enrobage appétant est constitué à base de céréales et d'huile végétale ou de paraffine.

10. Utilisation selon l'une quelconque des revendications 7 à 9, dans laquelle les produits rodenticides se présentent sous forme de granulés, de pâtes, de blocs, ou d'un mélange avec des céréales.

## Patentansprüche

1. Verwendung von hydrophilen Polymeren von Polyacrylsäure oder Polyacrylat mit einwertigem Kation, die in Anteilen zwischen 50 und 10.000 Teilen pro Million vernetzt sind, als rodentizider Wirkstoff.

2. Verwendung nach Anspruch 1, wobei es sich bei dem einwertigen Kation um Natrium handelt.

3. Verwendung nach Anspruch 1 oder 2, wobei in Gegenwart des mittleren pH-Werts des Magenmilieus eines Nagetiers die Wasserabsorption des rodentiziden Wirkstoffs zwischen 10 % und 30 % liegt und dass in Gegenwart des mittleren pH-Werts des Darmmilieus eines Nagetiers die Wasserabsorption des rodentiziden Wirkstoffs zwischen 50 % und 100 % liegt.

4. Verwendung nach einem der Ansprüche 1 bis 3, wobei es sich bei den hydrophilen Polymeren um vernetzte Natriumpolyacrylate handelt, die als einziger rodentizider Wirkstoff verwendet werden, wobei die Polymere insbesondere nicht durch Verkapselung formuliert sind.

5. Verwendung nach einem der Ansprüche 1 bis 4, wobei die Vernetzungsgrade der Polymere zwischen 100 ppm und 6000 ppm, insbesondere zwischen 200 and 1500 ppm, liegen.

6. Verwendung nach einem der Ansprüche 1 bis 5, wobei die von den hydrophilen Polymeren absorbierte Wassermenge vor der Formulierung weniger als 600 % beträgt und vorzugsweise zwischen 100 und 500 Gew.-% und noch weiter bevorzugt zwischen 120 und 450 Gew.-%, bezogen auf das Gesamtgewicht an Polymeren, liegt.

7. Verwendung nach einem der Ansprüche 1 bis 6, wobei die hydrophilen Polymere in rodentiziden Produkten, vorzugsweise ohne zusätzlichen rodentiziden Wirkstoff und außerdem insbesondere ohne eine Formulierung durch Verkapselung, mit einem schmackhaften Überzug gemäß jeweiligen Anteilen im Bereich von 1 bis 50 Massen-% Polymer und 99 bis 50 Massen-% schmackhafter Überzug, bezogen auf die Gesamtmasse der rodentiziden Produkte, formuliert sind.

8. Verwendung nach Anspruch 7, wobei die hydrophilen Polymere in rodentiziden Produkten, vorzugsweise ohne zusätzlichen rodentiziden Wirkstoff, mit einem schmackhaften Überzug gemäß jeweiligen Anteilen im Bereich von 5 bis 40 Massen-% Polymer und 95 bis 60 Massen-% schmackhafter Überzug, bezogen auf die Gesamtmasse der rodentiziden Produkte, formuliert sind.

9. Verwendung nach einem der Ansprüche 7 oder 8, wobei der schmackhafte Überzug auf Getreide und Pflanzenöl oder Paraffin basiert.

10. Verwendung nach einem der Ansprüche 7 bis 9, wobei die rodentiziden Produkte in Form von Granulaten, Pasten, Blöcken oder einer Mischung mit Getreide vorliegen.

## Claims

1. The use of hydrophilic polymers of polyacrylic acid or polyacrylate of monovalent cation, crosslinked in proportions of between 50 and 10 000 parts per million, as a rodenticidal active substance.

2. The use as claimed in claim 1, wherein the monovalent cation is sodium.

3. The use as claimed in claim 1 or 2, wherein, in the presence of the mean pH of the stomach medium of a rodent, the absorption of water by said rodenticidal active substance is between 10% and 30%, and, in the presence of the mean pH of the intestinal medium of a rodent, the absorption of water by said rodenticidal active substance is between 50% and 100%.

4. The use as claimed in any one of claims 1 to 3, wherein the hydrophilic polymers are crosslinked sodium polyacrylates, used as only rodenticidal active substance, said polymers being in particular not formulated by encapsulation.

5. The use as claimed in any one of claims 1 to 4, wherein the degrees of crosslinking of the polymers are between 100 ppm and 6000 ppm, in particular between 200 and 1500 ppm.

6. The use as claimed in any one of claims 1 to 5, wherein the amount of water absorbed by the hydrophilic polymers, before formulation, is less than 600%, preferably between 100% and 500% by weight and more preferably still between 120% and 450% by weight, with respect to the total weight of polymers.

7. The use as claimed in any one of claims 1 to 6, wherein the hydrophilic polymers are formulated in rodenticidal products, preferably devoid of additional rodenticidal active substance, and also in particular devoid of a formulation by encapsulation, exhibiting an appetizing coating according to respective proportions of 1% to 50% by mass of polymer and of 99% to 50% by mass of appetizing coating, with respect to the total mass of the rodenticidal products.

8. The use as claimed in claim 7, wherein the hydrophilic polymers are formulated in rodenticidal products, preferably devoid of additional rodenticidal active substance, exhibiting an appetizing coating according to respective proportions ranging from 5% to 40% by mass of polymers and ranging from 95% to 60% by mass, with respect to the total mass of the rodenticidal products.

9. The use as claimed in either of claims 7 and 8, wherein the appetizing coating is made using cereals and vegetable oil or paraffin.

10. The use as claimed in any one of claims 7 to 9, wherein the rodenticidal products are provided in the form of granules, of pastes, of blocks or of a mixture with cereals.
